# EUROPEAN PATENT SPECIFICATION

(11) **EP 1 656 513 B1**
(45) Date of publication and mention of the grant of the patent: **04.02.2009**
(21) Application number: 04781259.9
(22) Date of filing: 16.08.2004
(51) Int. Cl.: F16H 7/12

(54) **TENSIONER**
SPANNVORRICHTUNG
TENSIONNEUR

(30) Priority: 21.08.2003 US 497250 P
(43) Date of publication of application: 17.05.2006
(73) Proprietor: The Gates Corporation, Denver, CO 80202 (US)
(72) Inventor: HAO, Minchun, Windsor, Ontario N9E 1P4 (CA); BYRNE, Frank, Windsor, Ontario N9E 1X3 (CA)
(74) Representative: Tunstall, Christopher Stephen
(86) International application number: PCT/US2004/026541
(87) International publication number: WO 2005/022001

(56) References cited:
- EP-A- 0 866 240
- US-A- 3 418 027
- US-A1- 2002 119 850
- US-A1- 2003 153 422

## Description

### Field of the Invention

The invention relates to a tensioner, more particularly, to a tensioner having a tapered bushing and torsion spring joining a pivot arm to a base.

### Background of the Invention

Belt tensioners generally comprise a base that is mounted to a mounting surface such as an engine block. The base can comprise a pivot to which a tension arm is pivotally, connected. A biasing member such as a spring is used to apply a spring force to the tension arm and thereby two a belt, thereby maintaining a belt tension in a belt system.

The prior art sprang is compressed between the base and tension arm. More particularly, as the pivot arm is connected to the base the spring is compressed between the tension arm and the base. This affords a measure of preload on a frictional surface for damping a tension arm movement as well as pre-stressing the tension arm and base so they do not move except as designed. A fastener is needed to hold the tension arm and base together prior to mounting the pensioner on a mounting surface.

Prior art tensioners also make use of tapered brushings. Such bushings enhance alignment between a base and tension arm.

Representative of the art is US Patent No. 6, 575, 860 B2 to Dutil (2003) which discloses a belt tensioner having a bushing between a baseband a tension arm and a torsion spring disposed therebetween for biasing the tension arm. The torsion spring is compressed between the base and the tension arm.

Also representative of the art is US patent no. 4, 698, 049 to Bytzek et al. (1987) which discloses a belt tensioner having a pivoted structure with a frustoconical sleeve.

The prior art does not teach use of a tensioner having a self-aligning feature comprising a tapered bushing combined with a contractive torsion spring force to hold the pivot arm to the base.

What is needed is a tensioner having a self-aligning feature comprising a tapered bushing combined with a contractive torsion spring force to hold the pivot arm to the base. The present invention meets this need.

### Summary of the Invention

The primary aspect of the present invention is to provide, a tensioner having a self aligning feature comprising a tapered bushing - combined with a contractive torsion spring force to hold the pivot arm to the base.

Other aspects of the invention will be pointed out or made apparent by the following description of the invention and the accompanying drawings.

The invention comprises a tensioner as defined in claim 1, appended hereto. The tensioner comprises a pivot arm connected to a base by a contractive torsion spring force. The spring is threaded into engagement with a channel in the pivot arm and the base, thereby holding the parts together. The tensioner also comprises a self aligning feature comprising a tapered bearing disposed on a shaft between the pivot arm and the base.

The features of the present invention that are known from EP 0 866 240 A have been placed in the preamble of claim 1.

### Brief Description of the Drawings

Fig. 1 is a cross-sectional elevation view of the tensioner without a pulley.
Fig. 2 is a plan view of the top of the tensioner.
Fig. 3 is a side view of the tensioner.
Fig. 4 is a plan view of the bottom of the tensioner.
Fig. 5 is an exploded view of the tensioner.
Fig. 6 is a cross-sectional elevation view of the tensioner with a pulley.

### Description of the Preferred Embodiment of the Invention

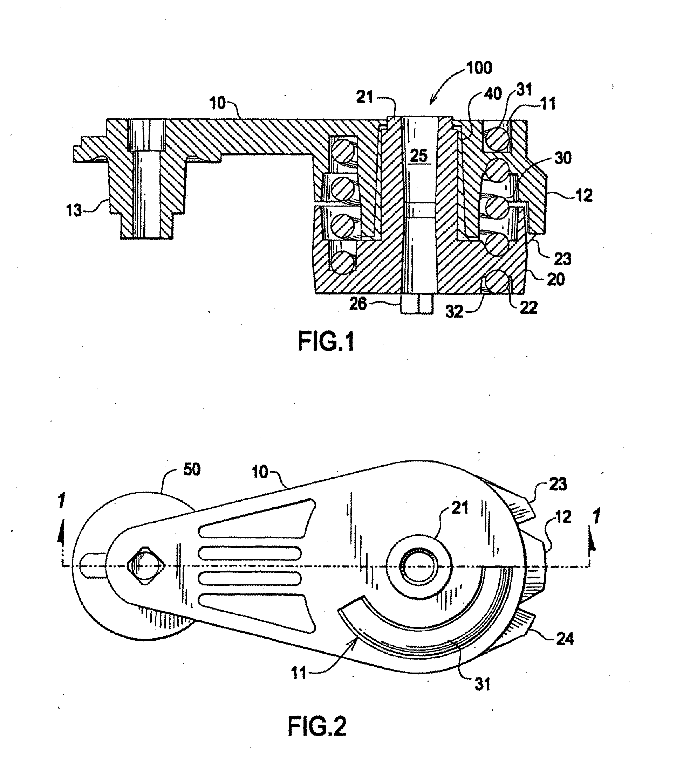

Fig. 1 is a cross-sectional elevation view of the tensioner without a pulley. The tensioner 100 comprises pivot arm 10 pivotally connected to a base 20. Base 20 comprises a shaft 21. Pivot arm 10 is disposed on shaft 21. Bushing 40 is disposed between pivot arm 10 and shaft 21.

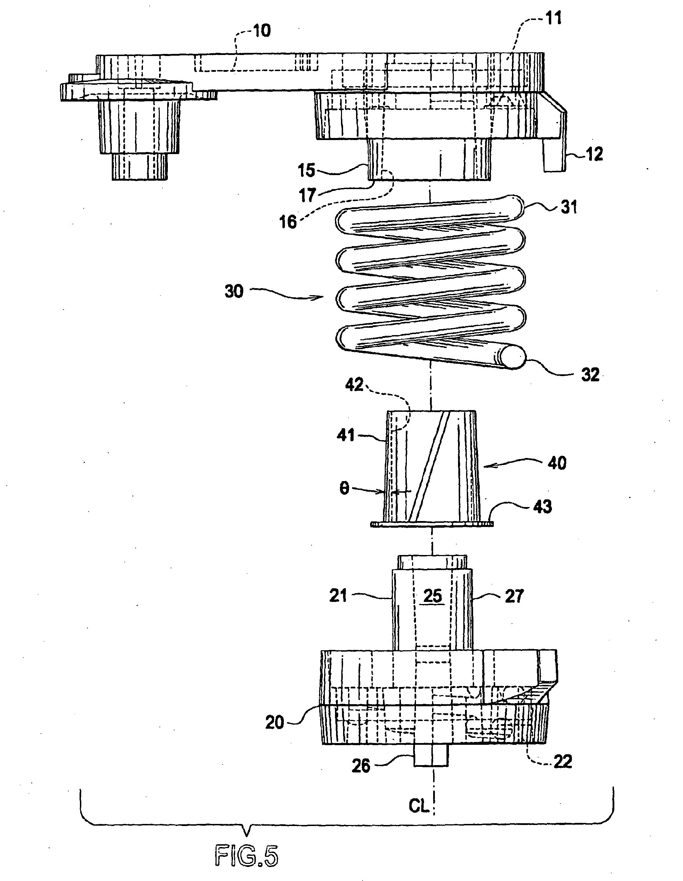

Torsion spring 30 has ends 31; 32, see Fig. 5 Pivot arm 10 comprises as channel 11 for receiving end 31. Base 20 comprises a channel 22 for receiving end 32. Torsion spring 30 has a torsional spring rate K. The spring rate K is selected based upon a desired belt load in a belt drive system (not shown). The spring applies a load to a belt through the pivot arm and pulley (see Fig 2.) in order to prevent belt slippage and noise generation. A bore 25 in base 20 receives a fastener (not shown) for attaching the tensioner to a mounting surface. The fastener can comprise any known in the art, including a threaded bolt, rivet or stud installed by pressed fit.

Fig. 2 is a plan view of the top of the tensioner A pulley 50 is journaled to an end of pivot arm 10. Member 12 on the pivot arm is disposed between stops 23, 24 to control a range of movement of pivot arm 10. End 31 of spring 30 is shown disposed in channel 11. Channel 11 has an arcuate shape to accommodate the form of spring 30. Channel 11 is of a sufficient depth to that the spring does not project beyond the base plane 14.

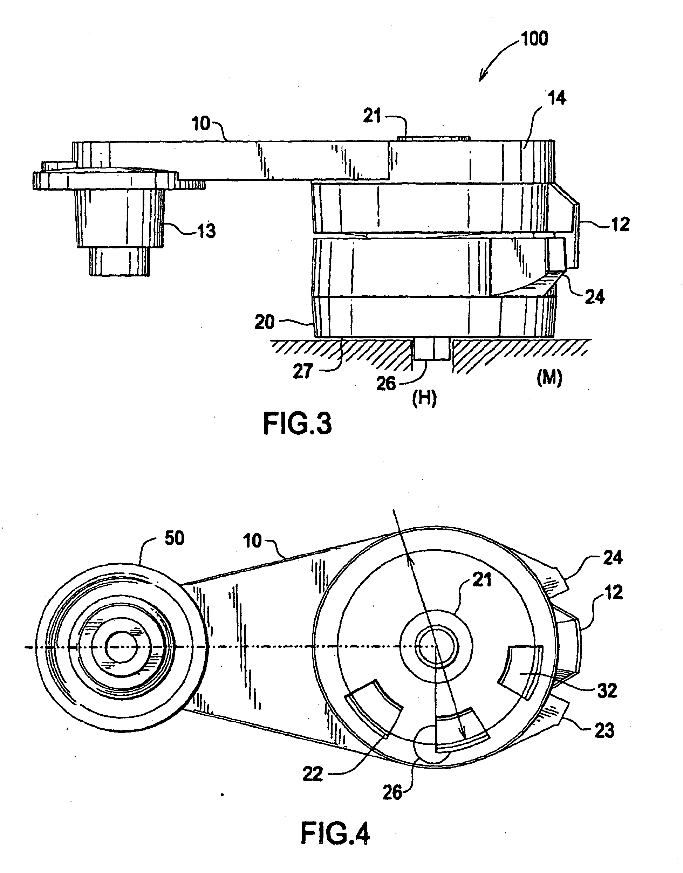

Fig. 3 is a side view of the tensioner. Pin 26 is shown projecting from a base surface. Pin 26 engages a hole (H) in a mounting surface (M). The combination of a fastener engaged in bore 25 and pin 26 engages with at mounting surface hole prevents the tensioner from rotating while in operation. Stop 24 projects from the side of base 20. Member 12 projects from the side of pivot arm 10.

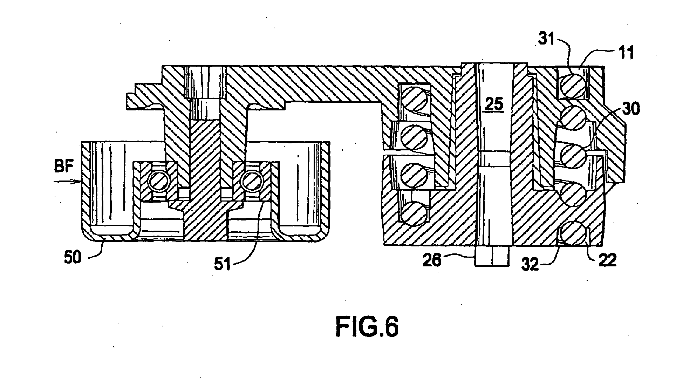

Fig. 4 is a plan view of the bottom of the tensioner. Pulley 50 is journaled to an end of pivot arm 10 with bearing 51 (see Figure 6). End 32 of spring 30 is engage in channel 22. Channel 22 is arcuate to accommodate the form of the spring. Channel 22 is of a sufficient depth to assure that the spring does not project beyond the base plane 27, thereby assuring a flat and stable mounting surface.

Fig. 5 is an exploded view of the tensioner. Bushing 40 is disposed between pivot arm 10 and base 20. Bushing 40 comprises any of the known materials suitable for such service, including but not limited to PTFE, urethane, polyethylene, nylon 6.6, and nylon 4.6.

More particularly, bushing 40 is disposed between annulus 15 and shaft 21. Inner surface 16 frictionally engages surface 41. Outer surface 27 of shaft 21 frictionally engages surface 42. Collar 43 projects radially from bushing 40.

Surface 41 is disposed at an angle θ with respect to surface 42, thereby realizing a tapered form. The taper is a self-aligning feature that centers and locates the pivot arm on the shaft with respect to the base. This improves the operating life of the tensioner by equally distributing forces during operation. The angle θ is in the range of greater than 0° to approximately 20°. Unlike the prior art which requires more costly machining of a tapered surface, surface 42 is parallel to surface 27, both of which are parallel to the centerline of bore 25. Only surface 41 and surface 16 are disposed at an angle 9 to the centerline CL of bore 25.

Spring 30 not only biases the pivot arm against a belt, but it also joins pivot arm 10 to base 20. During assembly spring 30 is stretched from its unloaded length in order to engage each end in channels 11 and 22. Stretching spring 30 results in a contractive force being exerted upon the pivot arm and base, urging them toward each other and thereby holding the two together. This causes annulus 15 to engage bushing 40 and thereby shaft 21. Surface 17 of annulus 15 is held in pressing, frictional engagement with collar 43.

The bushing surfaces, 41, 42 each have a coefficient of friction that results in a frictional force being generated which opposes and thereby damps a movement of pivot arm 10 during operation. The frictional engagements between the annulus 15 and shaft 21 and the bushing damp oscillatory movements of pivot arm 10.

Fig. 6 is a cross-sectional elevation view of the tensioner with a pulley. Pulley 50 is journaled to pivot arm 10 by bearing 51.

To assemble the tensioner, an end of spring 30 is first threaded into either channel 11 or 22. The spring is then axially extended an amount necessary to allow engaging the other end with the other channel. The pivot arm and base are then rotated with respect to each other in order to fully engage the other end with the other channel. It is necessary that the pivot arm and base be held slightly apart during this operation as it would not otherwise be possible for them to be rotated due to the engagement between member 12 and stops 23, 24. Once the spring is fully engaged with channels 11 and 22, then the pivot arm and base are allowed to come together (due to the contractive spring force) with member 12 and stops 23, 24 in the orientation shown in Fig. 2. The relative height of member 12 can be adjusted in order to minimize the separation necessary to assemble the pivot arm on the base.

The inventive tensioner design allows a belt force BF to be substantially aligned with bushing 40 hence creating a stable bushing wear situation with little or no moments being imposed on the bushing. Bearing 40 wears evenly because the belt force is distributed evenly across the bushing in a normal load fashion.

The tapered shape of the bushing provides a self-aligning feature that assures proper alignment of the pivot arm and base as these parts are only held together with the contractive spring force.

Although forms of the invention has been described herein, it will be obvious to those skilled in the art that variations may be made in the construction and relation of the parts without departing from the scope of the invention described herein.

## Claims

1. A tensioner (100) comprising:
a base (20);
a pivot arm (10) mounted to the base (20) on a pivot bearing (40), the pivot bearing (40) having a tapered form with respect to a pivot axis;
a pulley (50) journaled to the pivot arm (10); and
a spring (30) interlocked between the base (20) and the pivot arm (10) for urging the pulley (50) into contact with a belt;
**characterised in that**:
the spring (30) exerts a contractive force upon the pivot arm (10) and base (20), urging them toward each other and thereby holding the two together.

2. The tensioner (100) as in claim 1 further comprising a channel (11) in the pivot arm (10) for receiving an end (31) of the spring (30).

3. The tensioner (100) as in claim or claim 2, further comprising a channel (22) in the base (20) for receiving an end (32) of the spring (30).

4. The tensioner (100) as in any one of the preceding claims, further comprising a bushing (40) disposed between the pivot arm (10) and the base (20), the bushing (40) having a tapered form.

5. The pensioner (100) as in claim 4 wherein the bushing (40) comprises one of, PTFE, urethane, polyethylene, nylon 4.6 or pylon 6.6.

6. The tensioner (100) as in any one of the preceding claims, wherein the spring (30) comprises a torsion spring.

7. The tensioner (100) as in any one of the preceding claims, wherein the base (20) comprises a bore (25) for receiving a fastener and a member projecting from a, base surface for engaging the base (20) with a mounting surface.

8. The tensioner (100) as in any one of the preceding claims, wherein:
the pivot arm (10) further comprises a member (12); and
the base (20) further comprises at least one stop (23) which cooperates with the member (12) to limit a pivot arm rotation.

## Patentansprüche

1. Spannvorrichtung (100) mit:
einem Basisteil (20);
einem an dem Basisteil (20) an einem Schwenklager (40) befestigten Schwenkarm (10), wobei das Schwenklager (40) eine konische Form in Bezug zu einer Schwenkachse aufweist;
einer an dem Schwenkarm (10) gelagerten Riemenscheibe (50); und
einer zwischen dem Basisteil (20) und dem Schwenkarm (10) angeordneten Feder (30) zum Drücken der Riemenscheibe (50) in Kontakt mit einem Riemen;
**dadurch gekennzeichnet, dass**
die Feder (30) eine Zugkraft auf den Schwenkarm (10) und das Basisteil (20) ausübt, wodurch diese zwei Teile aufeinander zu gedrückt und zusammengehalten werden.

2. Spannvorrichtung (100) nach Anspruch 1, ferner mit einem Kanal (11) in dem Schwenkarm (10) zum Aufnehmen eines Endes (31) der Feder (30).

3. Spannvorrichtung (100) nach Anspruch 1 oder 2, ferner mit einem Kanal (22) in dem Basisteil (20) zum Aufnehmen eines Endes (32) der Feder (30).

4. Spannvorrichtung (100) nach einem der vorhergehenden Ansprüche, ferner mit einer zwischen dem Schwenkarm (10) und dem Basisteil (20) angeordneten Buchse (40), die eine konische Form aufweist.

5. Spannvorrichtung (100) nach Anspruch 4, bei der die Buchse (40) ein Material aus der Gruppe von PTFE, Urethan, Polyethylen, Nylon 4.6 oder Nylon 6.6 aufweist.

6. Spannvorrichtung (100) nach einem der vorhergehenden Ansprüche, bei der die Feder (30) eine Torsionsfeder aufweist.

7. Spannvorrichtung (100) nach einem der vorhergehenden Ansprüche, bei der das Basisteil (20) eine Bohrung (25) zum Aufnehmen eines Befestigungsteils und ein von einer Basisfläche vorstehendes Element zum Zusammengreifen des Basisteils (20) mit einer Montagefläche aufweist.

8. Spannvorrichtung (100) nach einem der vorhergehenden Ansprüche, bei der:
der Schwenkarm (10) ferner ein Element (12) aufweist; und
das Basisteil (20) ferner mindestens einen Anschlag (23) aufweist, der mit dem Element (12) zusammenwirkt, um die Schwenkarmdrehung zu begrenzen.

## Revendications

1. Tendeur (100) comprenant :
une base (20) ;
un bras pivotant (10) monté sur la base (20) sur une crapaudine (40), la crapaudine (40) ayant une forme fuselée par rapport à un axe de pivot ;
une poulie (50) attachée au bras pivotant (10) ; et
un ressort (30) emboîté entre la base (20) et le bras pivotant (10) destiné à pousser la poulie (50) en contact avec une courroie ;
**caractérisé en ce que** :
le ressort (30) exerce une force de contraction sur le bras pivotant (10) et la base (20), les poussant l'un vers l'autre et maintenant ainsi les deux ensemble.

2. Tendeur (100) selon la revendication 1 comprenant en outre une rainure (11) dans le bras pivotant (10) destinée à recevoir une extrémité (31) du ressort (30).

3. Tendeur (100) selon la revendication 1 ou la revendication 2 comprenant en outre une rainure (22) dans la base (20) destinée à recevoir une extrémité (32) du ressort (30).

4. Tendeur (100) selon l'une quelconque des revendications précédentes comprenant en outre un coussinet (40) disposé entre le bras pivotant (10) et la base (20), le coussinet (40) ayant une forme fuselée.

5. Tendeur (100) selon la revendication 4 dans lequel le coussinet (40) comprend un matériau parmi du polytétrafluoroéthylène, de l'uréthane, du polyéthylène, du nylon 4.6 ou du nylon 6.6.

6. Tendeur (100) selon l'une quelconque des revendications précédentes dans lequel le ressort (30) comprend un ressort de torsion.

7. Tendeur (100) selon l'une quelconque des revendications précédentes dans lequel la base (20) comprend un trou (25) destiné à recevoir une pièce de fixation et un élément faisant saillie sur une surface de base destinés à mettre la base (20) en prise avec une surface de montage.

8. Tendeur (100) selon l'une quelconque des revendications précédentes dans lequel :
le bras pivotant (10) comprend en outre un élément (12) ; et
la base (20) comprend en outre au moins une butée (23) qui coopère avec l'élément (12) pour limiter une rotation de bras pivotant.
